Europäisches Patentamt

European Patent Office

Office européen des brevets

(19)

(11) Publication number : **0 162 020**
**B1**

(12) **EUROPEAN PATENT SPECIFICATION**

(45) Date of publication of patent specification :
11.11.87

(51) Int. Cl.⁴ : **B 23 D 25/12**, B 21 B 39/00

(21) Application number : **85830087.4**

(22) Date of filing : **09.04.85**

(54) Method and apparatus for allowing the free passage of heavy-gauge material through a flying drum shear.

(30) Priority : **12.04.84 IT 2050684**

(43) Date of publication of application :
**21.11.85 Bulletin 85/47**

(45) Publication of the grant of the patent :
**11.11.87 Bulletin 87/46**

(84) Designated contracting states :
**AT BE CH DE FR GB LI LU NL SE**

(56) References cited :
**DE-A- 2 330 407**
**DE-B- 1 244 527**
**DE-C- 517 370**
**FR-A- 2 149 173**
**US-A- 3 197 992**

(73) Proprietor : **INNSE INNOCENTI SANTEUSTACCHIO S.p.A.**
**20, Via A. Franchi**
**I-25100 Brescia (IT)**

(72) Inventor : **Rothauer, Rudolf**
**Via Calzecchi, 5**
**I-20133 Milano (IT)**

(74) Representative : **Vannini, Torquato et al**
**JACOBACCI-CASETTA & PERANI S.p.A. 7 Via Visconti di Modrone**
**I-20122 Milan (IT)**

## Description

The present invention relates to a method for allowing the free passage of heavy-gauge material through a flying drum shear, the method including the step of orienting the drums, which lie respectively above and below a plane of transit of the material, in a so-called free-passage position for the material, in which flat portions of respective sleeves of the drums face each other and are arranged symmetrically relative to the said transit plane.

The invention relates also to a flying drum shear.

In rolling-mill trains it is often necessary to allow the free passage of material through the drums of a flying shear; to this end, in conventional shears (see DE-A 2 330 407), the drums have one or more flat portions in their sleeves, which, when oriented in positions symmetrically facing each other about a plane of transit of the material, form a free passage opening when the shear is not operating.

The maximum depth of such a free passage opening is the distance between the flat zone of the upper drum and the plane of transit of the material. And this depth cannot be increased, for example by moving the upper drum away from the plane of transit of the material, since the kinematic coupling, and the phasing, between the drums of the flying shear would be compromised.

Consequently it is in practice impossible to pass heavy-gauge materials, such as, for example, flat boom, rough-shaped pieces and the like, between the drums of a flying shear which is not in operation.

It is for this reason that the flying shear in a rolling-mill train is generally positioned at the inlet to a finishing unit, where the material arriving has already been thoroughly worked and has thus been reduced in thickness or gauge.

The fundamental problem of this invention is to provide a method and a device for allowing the free passage of heavy-gauge material through the drums of a flying shear, that is, for increasing the free-passage opening between the drums of a flying shear, without incurring the disadvantage explained above in relation to prior-art shears.

This problem is resolved, according to this invention, by a method for allowing the passage of heavy-gauge material through a flying drum shear, in which the said drums have respective mantles each provided with a least one longitudinally-extending flattened surface portion, the drums being operatively supported in a stand with the interposition of respective roll chocks, in positions which are symmetrical relative to a support and/or transit plane for the material to be cut, the said method characterised by rigidly interconnecting the roll chocks to form a unit consisting of the drums and their roll chocks, which is displaceable as a whole and is guided for movement in a direction perpendicular to the said plane of transit; rotating the drums into a position in which their flattened portions face each other and are symmetrical about the said plane of transit; and displacing the said unit into a position in which the flattened portion of one of said drums is closely adjacent the said support and/or transit plane of the material.

The present invention also provides a flying drum shear in which the drums have respective mantles each provided with at least one longitudinally-extending flattened surface portion, the drums being operatively supported in a stand, with the interposition of respective roll chocks, in positions in which they are symmetrical relative to a support and/or transit plane for the material to be cut, characterised in that the shear includes: means for rigidly interconnecting the roll chocks to form a unit constituted by the drums and by the said roll chocks, the unit being slidable as a whole in guides extending within the stand in a direction perpendicular to the said plane of transit; means for moving the unit as a whole in the said guides from a first position, in which the flattened portions of the said drums face each other and are symmetrical about the said plane of transit, to a second position in which the flattened portion of one of the drums is closely adjacent the said plane of transit of the material.

The advantages of the invention will appear further from the following description of one method for allowing the free passage of heavy-gauge material through a flying drum shear, with reference to a preferred, but not exclusive, embodiment of a drum shear, illustrated by way of nonlimiting example in the appended drawings, in which:

Figures 1 and 2 are diagrammatic side elevational views of a flying drum shear according to the invention, shown respectively in an operative position and in a non-operative position of free transit of the material through the drums, and

Figure 3 shows the flying shear according to the invention, in horizontal section along the longitudinal axis of one of the drums.

With reference to the drawings, there is indicated generally 1, a flying drum shear according to the invention, comprising a stand 2 fixed upon a machine bed 3 of which pairs of uprights, indicated 4, 5 and 6, 7 are arranged laterally and symmetrically in relation to a support and/or of transit plane 8 for the material to be cut, shown diagrammatically at 9. The pairs of uprights 4, 5 and 6, 7 are interconnected and stiffened at their upper.ends by cross-pieces or the like (e.g. by a « cap ») so as to form overall a support structure spanning the said transit plane 8 for the material.

More particularly this plane of transit 8 consists of the plane of a roller bed 10 extending upstream and downstream of the stand 2.

A pair of horizontal drums 11, 12 are supported operatively in the stand 2, in the manner described below, in positions above and below the plane of transit 8 respectively.

Each of the drums 11, 12 has a respective cutter 13, 14. The mantles 15, 16 of the drums 11, 12 have respective longitudinally-extending flattened portions 17, 18.

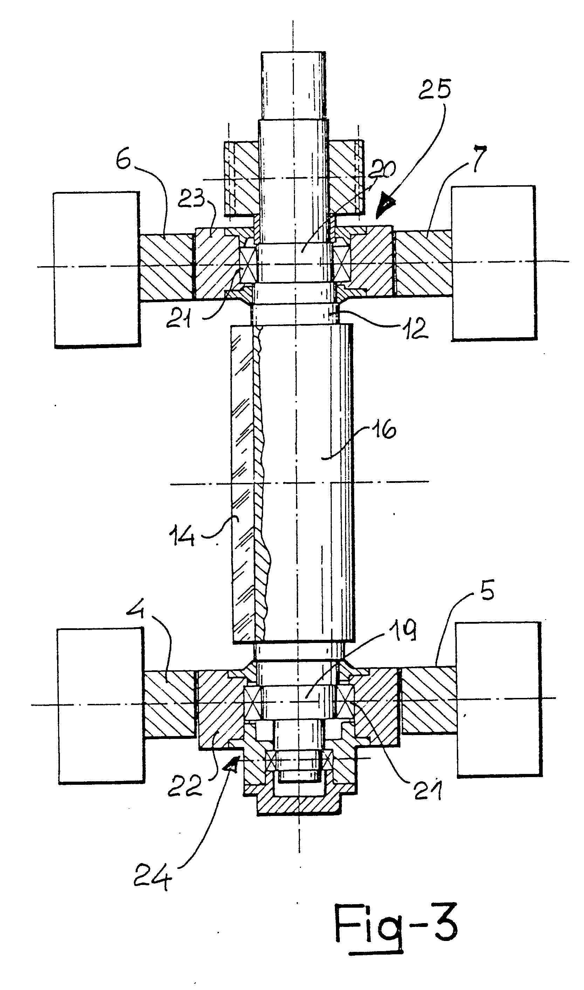

With reference to Figure 3, each of the drums has opposite ends 19, 20, rotatably supported, with the interposition of bearings each indicated diagrammatically by 21, in blocks 22, 23 which are substantially parallelipipedal. The whole support formed by the blocks 22, 23 and by the bearings 21, is often referred to as the roll chock. The roll chocks of the drums 11, 12 are indicated by the reference numerals 24, 25 and 26, respectively.

The roll chocks 24, 26 and 25, of the opposing drums 11, 12 are rigidly interconnected by means known per se, so that the drums 11, 12 and their roll chocks form a single unit and can be moved as one.

More particularly, and in accordance with a preferred embodiment, the rigid interconnection of the roll chocks mentioned above is effected by the manufacture of unitary blocks 22, 23 for rotatably housing the ends of the opposing drums.

These unitary blocks (or the roll chocks 24, 26 and 25, otherwise rigidly interconnected) are mounted slidingly between the pairs of supports 4, 5 and 6, 7 of the stand 2 which act as guides extending perpendicular to the material transit plane 8.

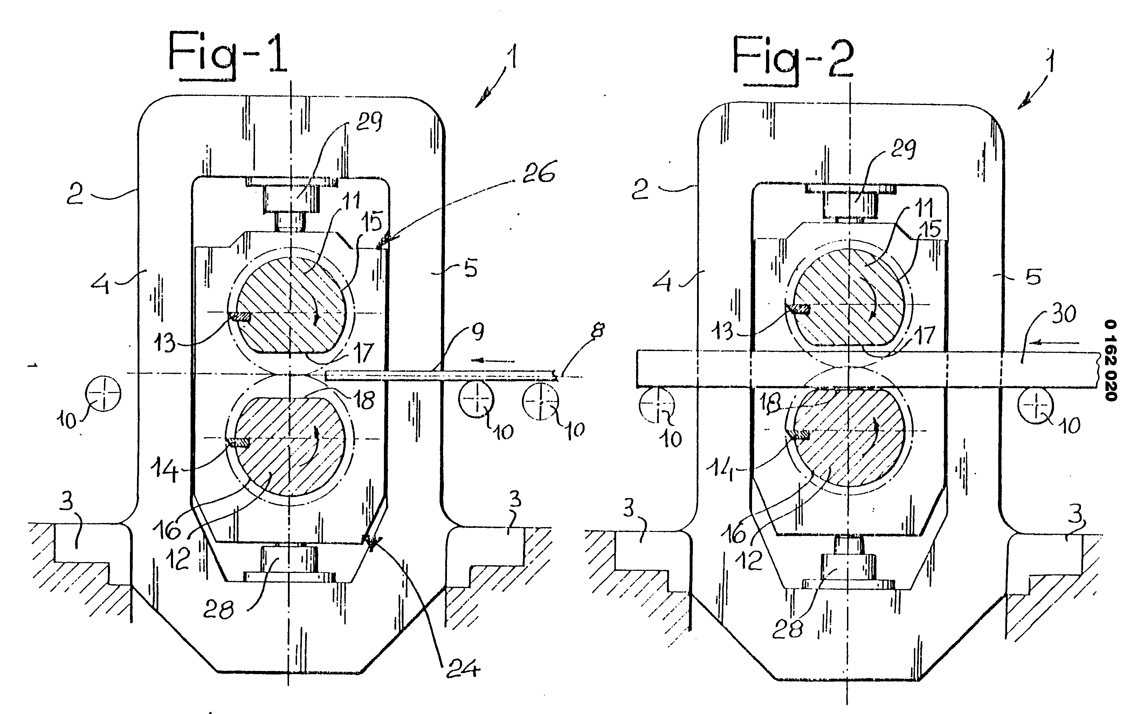

Hydraulic cylinders 28, 29 are positioned between the pairs of supports 4, 5 and 6, 7 and act on the unitary blocks 22, 23 (or on the rigidly interconnected roll chocks 24, 26 and 25, 27), as shown in Figures 1 and 2.

In an operating condition of the flying shear 1 (cutting condition) the upper drum 11 and lower drum 12 are in the position illustrated in Figure 1, in which their longitudinal axes are substantially symmetrical relative to the transit plane 8.

When it is desired to pass heavy-gauge materials through the drums 11, 12 of the shear of this invention, one proceeds as follows. The drums are angularly positioned so that their respective flattened portions 17, 18 face each other and are symmetrical relative to the plane of transit 8. Next, by appropriate action of the hydraulic cylinders 28 and 29, the entire unit consisting of the drums 11, 12 and their roll chocks 24, 25 and 26, 27, is lifted as a whole until the flattened portion 18 of the lower drum 12 is closely adjacent the said transit plane 8 (Figure 2). Thus the depth of the free passage opening for the material through the flying shear 1 becomes the distance between the flattened portions 17, 18 of the drums 11, 12 of the shear.

It should be observed that during the aforesaid raising, the relative positions of the drums 11 and 12 remains unchanged, so that the kinematic coupling and the phasing between the said drums remain unaltered.

The consequent advantage of allowing passage through the shear of heavy-gauge material 30, also brings the added advantage of the fact that, in a rolling train, the aforesaid shear can be installed at the outlet from the cogger since, should the rolling cycle be interrupted, it is possible to off-load semi-finished heavy-gauge material from the cogger through the shear. With the shear positioned close to the cogger it is possible to effect crop-end cutting at the speed of entry of the material to the cogger, which, as is well known, is considerably greater than the speed of entry of a finishing rolling mill.

**Claims**

1. Method for allowing the passage of heavy-gauge material through a flying drum shear (1), in which the said drums (11, 12) have respective mantles (15, 16), each provided with at least one longitudinally-extending flattened surface portion (17, 18), the drums being operatively supported in a stand (2) with the interposition of respective roll chocks, (24, 25, 26) in positions which are symmetrical relative to a support and/or transit plane for the material to be cut, the said method characterised by rigidly interconnecting the roll chocks to form a unit consisting of the drums and their roll chocks, which is displaceable as a whole and is guided for movement in a direction perpendicular to the said plane of transit ; rotating the said drums into a position in which their flattened portions face each other and are symmetrical about the said plane of transit ; and displacing the said unit into a position in which the flattened portion of one of the said drums is closely adjacent the said support and/or transit plane of the material.

2. A flying drum shear (1) in which the drums (11, 12) have respective mantles (15, 16) each provided with at least one longitudinally-extending flattened surface portion (17, 18), the drums being operatively supported in a stand (2), with the interposition of respective roll chocks (24, 25 and 26), in positions in which they are symmetrical relative to a support and/or transit plane for the material to be cut, characterised in that the shear includes : means (22, 23) for rigidly interconnecting the roll chocks to form a unit constituted by the drums (11, 12) and by the said roll chocks (24, 25 and 26), the unit being slidable as a whole in guides (4, 5 and 6, 7) extending within the stand (2) in a direction perpendicular to the said plane (8) of transit ; means (28, 29) for moving the unit as a whole in the said guides from a first position, in which the flattened portions (17, 18) of the said drums (11, 12) face each other and are symmetrical about the said plane (8) of transit, to a second position in which the flattened portion (18) of one of the said drums (12) is closely adjacent the said plane of transit of the material.

3. Flying drum shear according Claim 2, characterised in that the opposed pairs of roll chocks (24, 26 and 25) are united in respective unitary blocks (22, 23).

4. Flying drum shear according to Claim 3, characterised in that the unitary blocks (22, 23) are slidably engaged between the pairs of uprights (4, 5 and 6, 7) of the stand (2), which constitute respective vertical sliding guides for said blocks.

**Patentansprüche**

1. Verfahren zum Durchlassen dicker Bänder durch eine rotierende Schere (1), deren Walzen (11, 12) entsprechende Mäntel (15, 16) aufweisen, die jeweils mit mindestens einem sich in Längsrichtung erstreckenden abgeflachten Oberflächenbereich (17, 18) versehen sind, wobei die Walzen unter Zwischenfügung entsprechender Lagerböcke (24, 25, 26) in einem Walzgerüst (2) in Positionen abgestützt sind, die zu einer Stütz- und/oder Durchgangsebene für das zu durchschneidende Band symmetrisch sind, dadurch gekennzeichnet, daß die Walzen-Lagerböcke starr miteinander verbunden werden, um eine aus den Walzen und ihren Lagerböcken bestehende Einheit zu bilden, die in ihre Gesamtheit verlagerbar und zu einer Bewegung in einer zu der Durchgangsebene rechtwinkligen Richtung geführt ist, daß die Walzen in eine Position verdreht werden, in der ihre abgeflachten Bereiche einander zugekehrt und zu der Durchgangsebene symmetrisch sind, und daß die Einheit in eine Stellung verlagert wird, in der der abgeflachte Bereich einer der Walzen nahe bei der Stütz- und/oder Durchgangsebene des Bandes angeordnet ist.

2. Rotierende Schere (1), deren Walzen (11, 12) entsprechende Mäntel (15, 16) aufweisen, die jeweils mit mindestens einem sich in Längsrichtung erstreckenden abgeflachten Oberflächenbereich (17, 18) versehen sind, wobei die Walzen unter Zwischenfügung entsprechender Lagerböcke (24, 25, 26) in einem Walzgerüst (2) in Positionen abgestützt sind, in der sie zu einer Stütz- und/oder Durchgangsebene für das zu zerschneidende Material symmetrisch sind, gekennzeichnet durch Mittel (22, 23) zum starren Verbinden der Walzen-Lagerböcke zur Bildung einer von den Walzen (11, 12) und den Lagerböcken (24, 25, 26) gebildeten Einheit, wobei die Einheit in ihrer Gesamtheit in Führungen (4, 5 and 6, 7) verschiebbar ist, die sich innerhalb des Walzgerüstes (2) in einer zu der Durchgangsebene (8) rechtwinkligen Richtung erstrecken, Mittel (28, 29) zum Bewegen der Einheit in ihrer Gesamtheit in den Führungen von einer ersten Position, in der die abgeflachten Bereiche (17, 18) der Walzen (11, 12) einander zugekehrt und zu der Durchgangsebene (8) symmetrisch sind, in eine zweite Position, in der der abgeflachte Bereich (18) einer der Walzen (12) nahe der Durchgangsebene des Materials angeordnet ist.

3. Rotierende Schere nach Anspruch 2, dadurch gekennzeichnet, daß die gegenüberliegenden Paare von Walzen-Lagerböcken (24, 26 und 25) zu entsprechenden einstückigen Lagerböcken (22, 23) vereinigt sind.

4. Rotierende Schere nach Anspruch 3, dadurch gekennzeichnet, daß die einstückigen Lagerböcke (22, 23) zwischen den Paaren von Stän-

dern (4, 5 und 6, 7) des Walzgerüstes (2) verschiebbar angeordnet sind, die die entsprechenden vertikalen Gleitführungen für die Lagerböcke bilden.

**Revendications**

1. Méthode pour permettre le passage de bandes épaisses dans une cisaille volante à tambours (1), dans laquelle lesdits tambours (11, 12) ont des manchons extérieurs respectifs (15, 16), chacun étant prévu avec au moins un méplat (17, 18) s'étendant longitudinalement, les tambours étant supportés en fonctionnement dans une cage (2), avec l'interposition d'empoises de rouleaux respectives (24, 25, 26), dans des positions qui sont symétriques par rapport à un support et/ou un plan de transit pour la matière à couper, ladite méthode étant caractérisée par l'interconnexion rigide des empoises de rouleaux pour former une unité, constituée par les tambours et leurs empoises de rouleaux, qui est entièrement déplaçable et est guidée pour se déplacer dans un sens perpendiculaire audit plan de transit ; en faisant tourner lesdits tambours dans une position dans laquelle leurs méplats se font face et sont symétriques autour du même plan de transit ; et en déplaçant ladite unité dans une position dans laquelle le méplat de l'un desdits tambours est en contact étroit avec ledit support et/ou avec le plan de transit de la matière.

2. Cisaille volante à tambours (1), dans laquelle les tambours (11, 12) ont des manchons extérieurs respectifs (15, 16), chacun étant prévu avec au moins un méplat (17, 18) s'étendant longitudinalement, les tambours étant supportés en fonctionnement dans une cage (2), avec l'interposition d'empoises de rouleaux respectives (24, 25 et 26), dans des positions dans lesquelles elles sont symétriques par rapport à un support et/ou un plan de transit pour la matière à couper, caractérisée en ce que la cisaille comprend : des moyens (22, 23) pour l'interconnexion rigide des empoises de rouleaux pour former une unité constituée par les tambours (11, 12) et par lesdites empoises de rouleaux (24, 25 et 26), l'unité étant entièrement coulissante dans des dispositifs de guidage (4, 5 et 6, 7) s'étendant à l'intérieur de la cage (2) dans un sens perpendiculaire audit plan (8) de transit ; des moyens (28, 29) pour déplacer entièrement l'unité dans lesdits dispositifs de guidage et la faire passer d'une première position, dans laquelle les méplats (17, 18) desdits tambours (11, 12) se font face et sont symétriques autour du même plan (8) de transit, à une deuxième position dans laquelle le méplat (18) de l'un desdits tambours (12) est en contact étroit avec ledit plan de transit de la matière.

3. Cisaille volante à tambours suivant revendication 2, caractérisée en ce que les paires opposées d'empoises de rouleaux (24, 26 et 25) sont réunies dans des blocs unitaires respectifs (22, 23).

4. Cisaille volante à tambours suivant revendication 3, caractérisée en ce que les blocs unitaires (22, 23) sont engagés de façon coulissante entre les paires de montants (4, 5 et 6, 7) de la cage (2), qui constituent des dispositifs de guidage coulissants verticaux respectifs pour lesdits blocs.

Fig-1

Fig-2

0 162 020

Fig-3